# EUROPEAN PATENT APPLICATION

(11) **EP 4 588 829 A1**
(43) Date of publication of application: **23.07.2025**
(21) Application number: 24153029.4
(22) Date of filing: 22.01.2024
(51) Int. Cl.: B65G 1/04, B65G 57/03

(54) **STACKER FRAME**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

The disclosure relates to a stacker frame for a storage and retrieval system, wherein the stacker frame is configured to accommodate one or more storage containers. The stacker frame comprises an open top end, the open top end comprising a rim, wherein at least part of the rim comprises a first section of a rail, the first section of the rail configured to cooperate with a rail system disposed generally above the stacker frame.

## Description

### TECHNICAL FIELD

The disclosure relates to stacker frames. More particularly, it relates to a stacker frame for a storage and retrieval system, where the stacker frame is configured to cooperate with a rail system of the storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Storage containers, or bins, are dimensioned to fit into storage columns of the three-dimensional grid. For each storage and retrieval system, the storage containers thus have a standard size and structure which corresponds to that of the storage columns of that system. Automated storage and retrieval systems can also include components such as stacker frames, which are containers configured to accommodate a number of conventional or standard storage containers. In a similar manner to storage containers, stacker frames can be configured to be stacked, side by side, within a three-dimensional grid of a storage and retrieval system.

A stacker frame can have a larger cross-section than a storage container, as stacker frames are configured to accommodate at least one, if not multiple, storage containers. This larger cross-section can prevent stacker frames from being implemented alongside storage containers in existing storage and retrieval systems, as the stacker frame may not fit into the storage columns of such systems. The present inventors have recognised that it would be advantageous to provide a stacker frame, and associated systems and methods which address these shortcomings of existing storage and retrieval systems.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 - Fig.10 show a first storage and retrieval system comprising stacker frames;
Fig.11A-B illustrates a stacker frame, and a storage and retrieval system, according to the claimed invention;
Fig.12A-B illustrates a further stacker frame and a storage and retrieval system according to the claimed invention;
Fig.13 shows a perspective view of the storage and retrieval system according to the claimed invention;

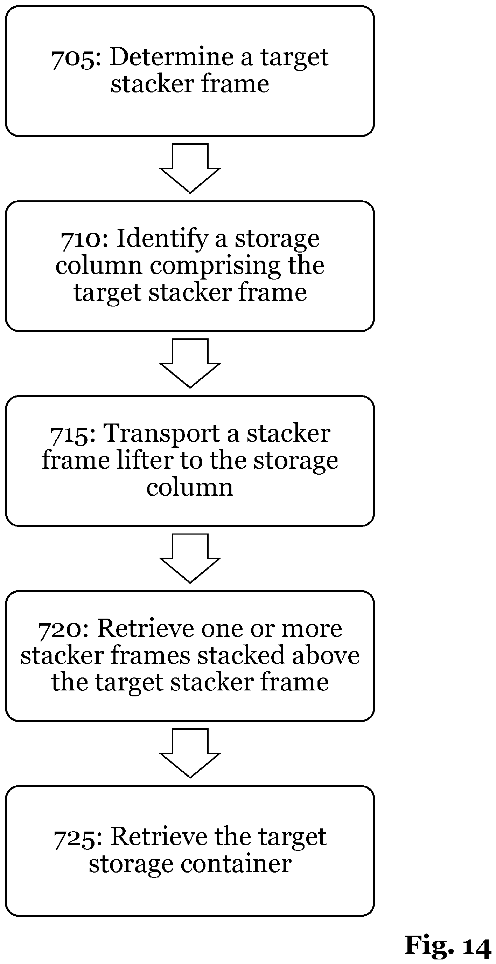

Fig.14 shows a method of retrieving a storage container from a storage and retrieval system according to the claimed invention; and
Fig.15 shows a second storage and retrieval system.

### DETAILED DESCRIPTION

In overview, the disclosure relates to a stacker frame for a storage and retrieval system, where at least part of the rim of the stacker frame comprises a section of rail configured to cooperate with a rail system of the storage and retrieval system. In existing storage and retrieval systems, storage columns are typically sized to accommodate storage containers of particular dimensions. A rail system is arranged on the grid of the storage and retrieval system, and the layout of the rail system is determined by the dimensions and arrangement of the storage columns. As a stacker frame is configured to accommodate a plurality of storage containers, the stacker frame is typically larger than a standard storage container, and thus occupies more space than a storage container. The larger dimensions of the stacker frame can thus prevent it from being utilised alongside storage containers in storage and retrieval systems, as the storage columns configured to accommodate stacker frames may not be able to share a rail system (i.e. a rail grid) with storage columns configured to accommodate storage containers.

The present inventors have recognised a need to provide a storage and retrieval system which can accommodate storage columns for both stacker frames and storage containers, and thus have recognised that providing a section of rail in the rim of the stacker frame allows for the provision of a storage and retrieval system which can accommodate both stacker frames and storage containers. In particular, providing a section of rail in the rim of the stacker frame, where the section of rail is configured to cooperate with the rail system of the storage and retrieval system, can compensate for the extra space in the storage column occupied by the stacker frame.

### Automated storage and retrieval system overview

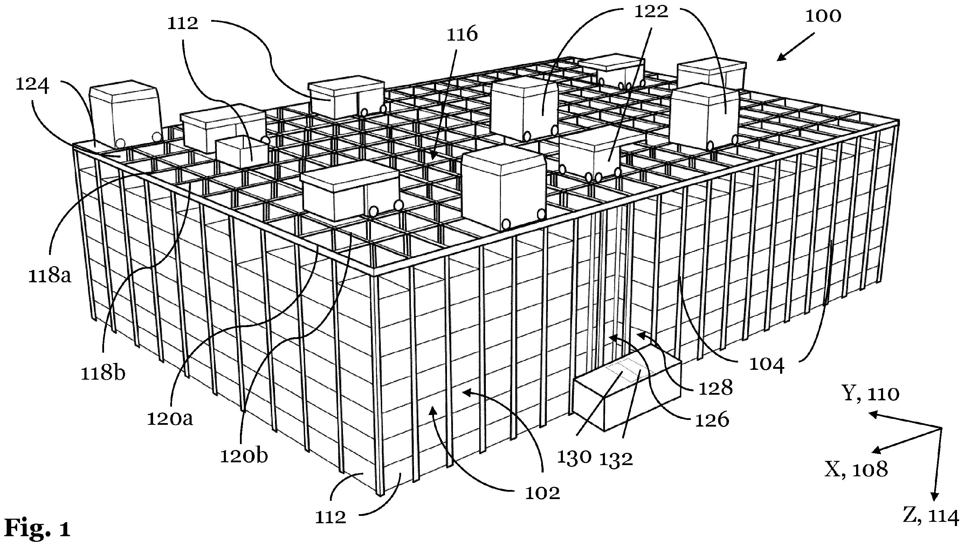

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

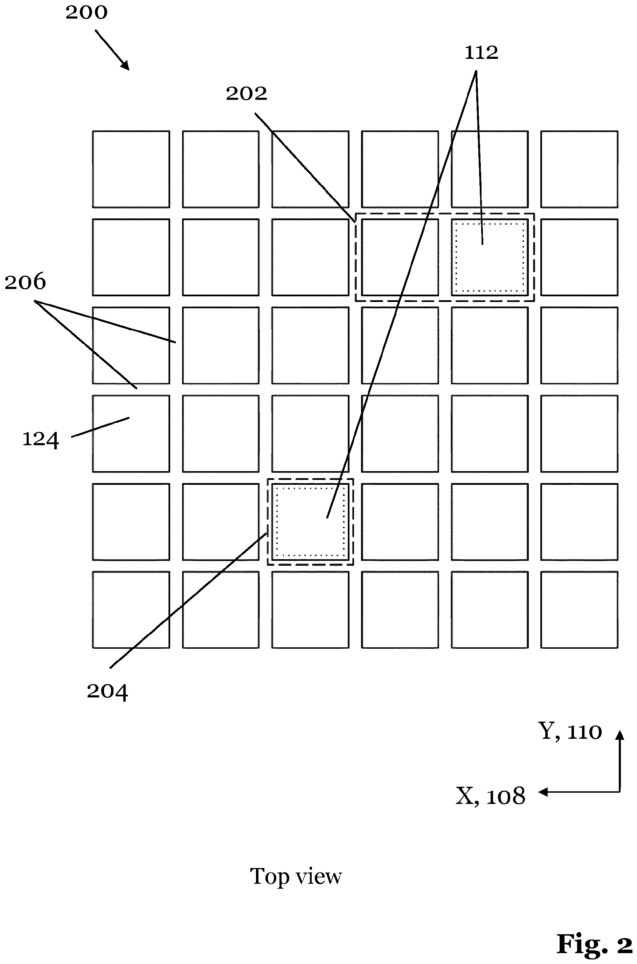

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

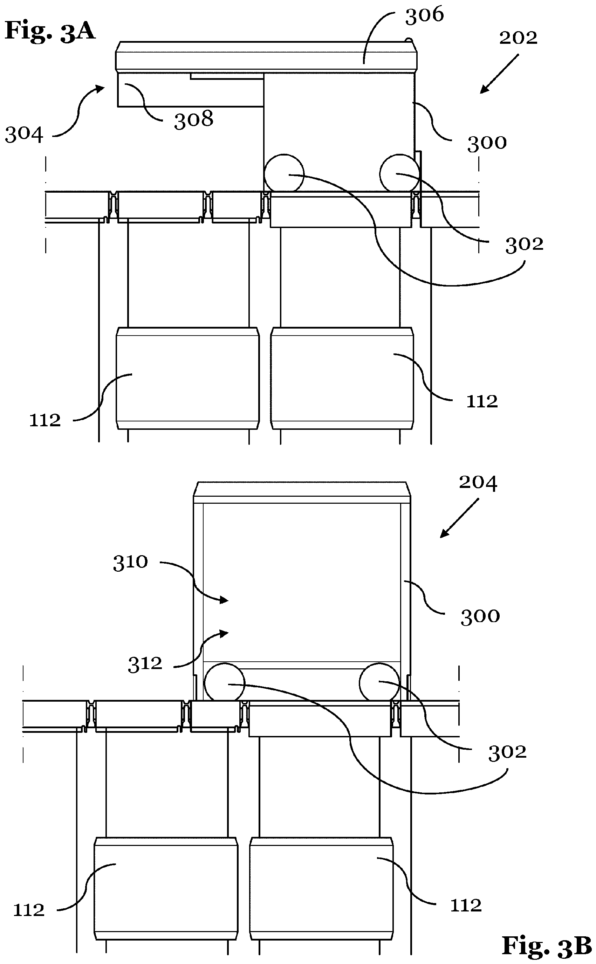

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

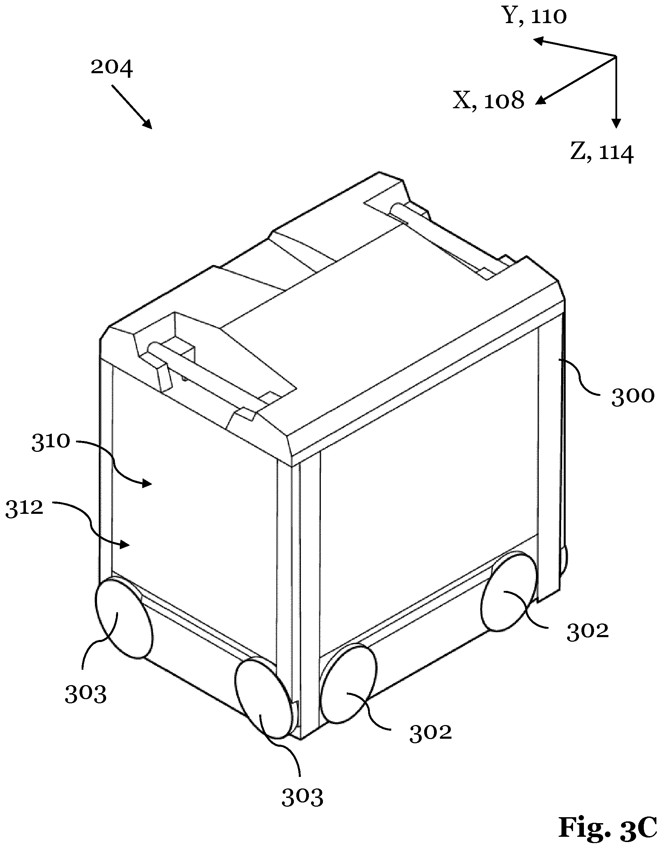

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

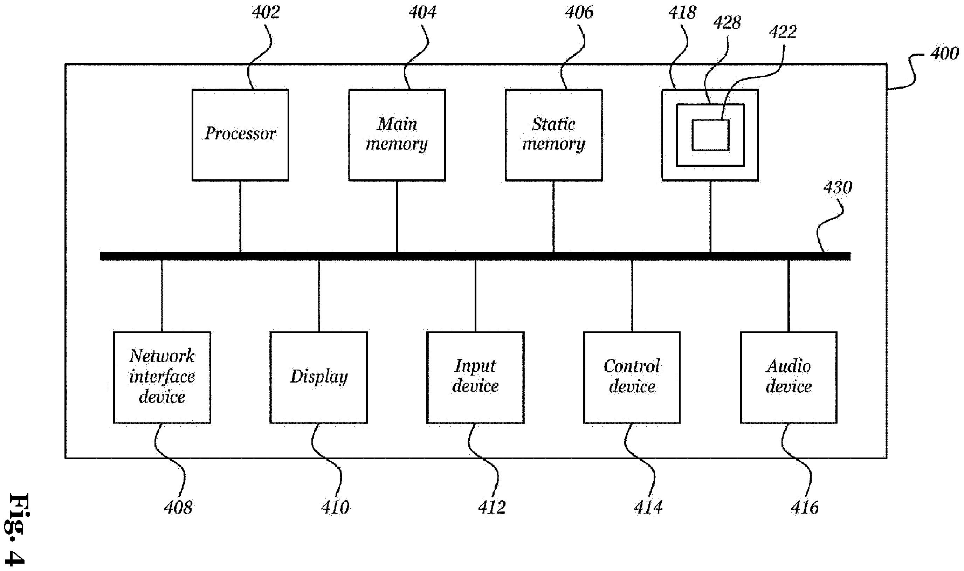

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### A storage and retrieval system comprising stacker frames

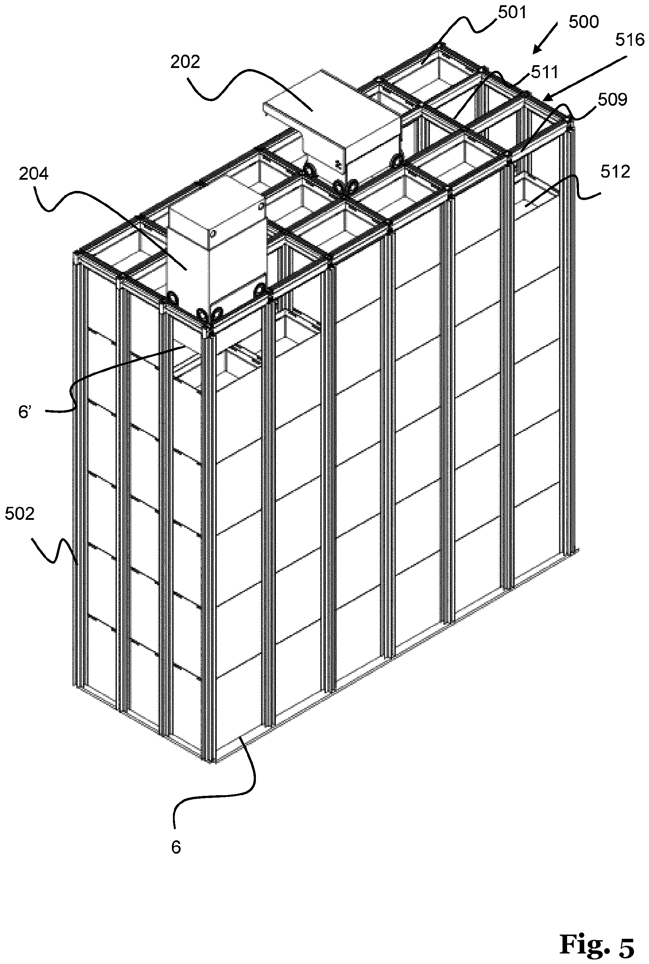

An exemplary storage and retrieval system 500 for one or more stacker frames is shown in Fig. 5-9. The storage system 500 comprises a grid, also referred to as a framework structure, 501, stacker frames 6, storage containers 512, and robots 522 such as an internal cavity type robot 204 and a cantilever type robot 202. The grid 501, the storage containers 512, and robots 522 maybe the same as or similar to the corresponding features of the system in fig. 1.

The grid 501 features vertical column profiles 502 which define a plurality of storage columns 505. One or more storage columns 505 can be configured to accommodate a plurality of stacker frames 6 arranged one on top of another in a vertical stack. In other words, one or more storage columns may be dimensioned to receive a plurality of stacker frames, the stacker frames arranged in a vertical stack and in a self-supporting manner.

Each of the stacker frames 6 has an open top end 9 for vertical passage of a storage container 512 and can be configured to accommodate a plurality of the storage containers 112 stored one on top of another in a vertical stack. In other words, a stacker frame may be configured to accommodate at least a plurality of storage containers arranged vertically. The stacker frame 6 is configured to support the bottom of a lowermost storage container 512 in a stack of storage containers 512 accommodated in the stacker frame 6.

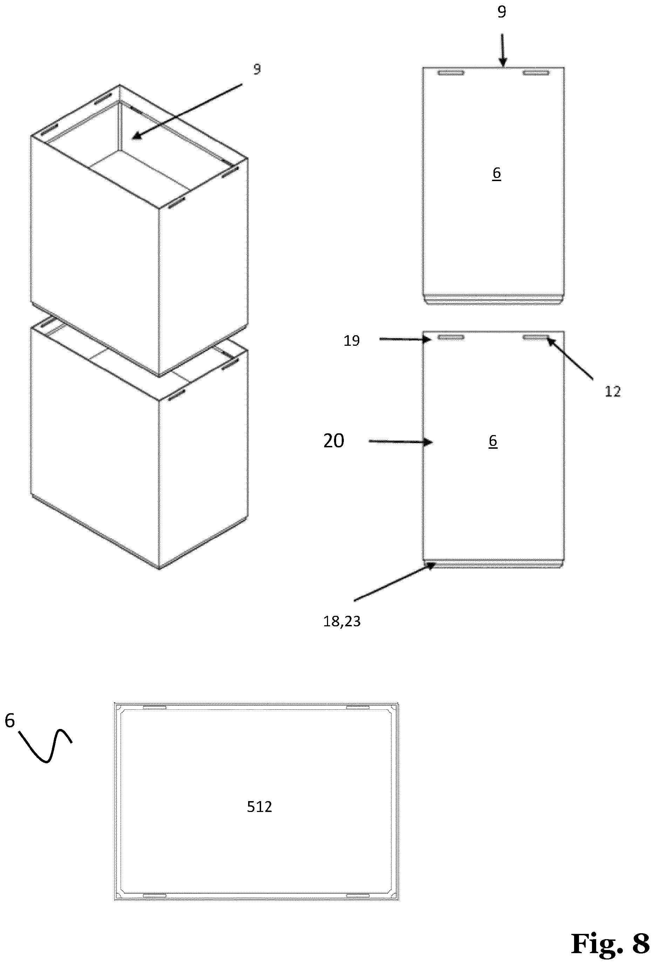

A stacker frame, see Fig. 8, can comprise a bottom section, or wall, 18, for supporting a lower end of a stack of storage containers 512, a top section 19 featuring the open end 9, through which end a storage container 512 may pass in a vertical direction, side sections, or walls, 20 extending between the bottom wall 18 and the top section (or open end) 19, and can also comprise connecting recesses 12 arranged at an upper portion of opposite side walls 20. The connecting recesses 12 are arranged at a level above an upper level of a stack of storage containers 512 arranged in the stacker frame.

To improve the stability of a stack of stacker frames, the bottom wall 18 of the stacker frame may have a recessed portion 23 having an outer periphery being smaller than, i.e. fitting within, an inner periphery of the top section 19. In this manner, the stacker frames 6 may be stacked on top of another while horizontal movement between them is restricted.

The exemplary storage and retrieval system 500 includes a rail system 516 arranged above or across the top of the grid 501. As noted above, the robots 522,202,204 are configured to move in two perpendicular directions on the rail system 516. In other words, the rail system is arranged to allow the robots 522 to move in a first direction and a second direction, in which the first direction is perpendicular to the second direction. The rail system includes rails defining between them vertical column access openings for access to storage containers 512.

The configuration or layout of the rail system 516 can depend on the configuration of the storage columns 505 in the grid, or vice versa. In other words, the layout of the rail system may follow or correspond to that of the storage columns in the grid, as shown in (e.g.) Fig.5, in order to define vertical column or storage column access openings for access to the stacker frames in the storage columns. As shown in Fig.5, the rail system 516 comprises at least a first set of parallel rails 509, and a second set of parallel rails 511, the first set of parallel rails 509 arranged perpendicularly to the second set of parallel rails 511. The first set of parallel rails 509 guide movement of robots 522 in, for example, the X-direction 508 as defined in Fig. 1, and the second set of parallel rails 511 guide movement of robots 522 in, for example, the Y-direction 510 as defined in Fig.1. The first set of parallel rails 509 and second set of parallel rails 511 maybe similar or the same as sets of rails 118a, 188b in Fig.1.

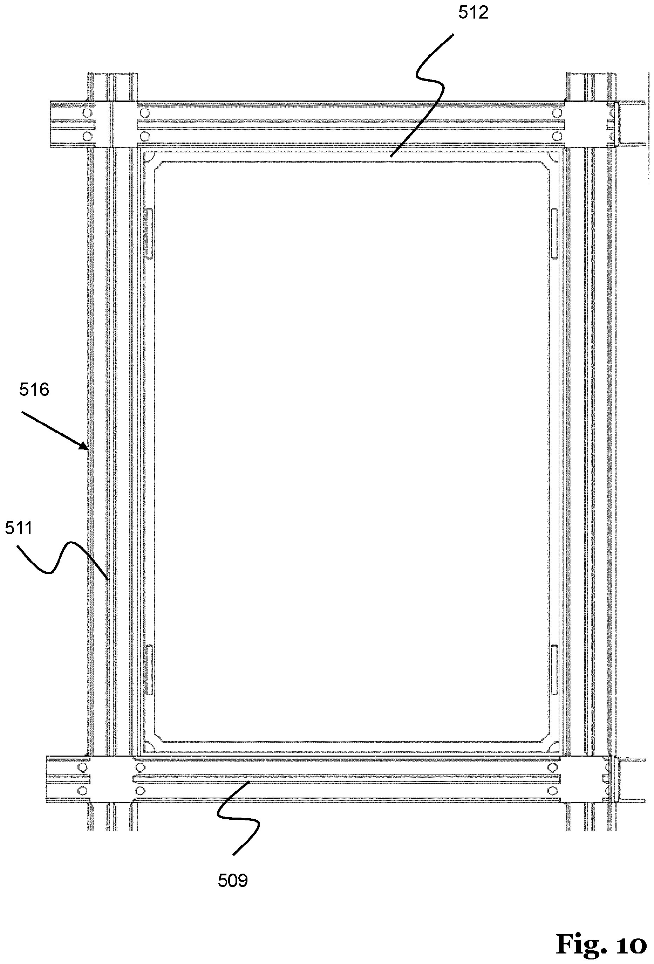

Fig.10 illustrates a top view of a section of the rail system 516, wherein the rail system 516 is configured to accommodate a vertical stack of stacker frames, each stacker frame comprising storage containers 512. As described above, the configuration or layout of the rail system 516 corresponds to the configuration of storage column 505 in the grid 501. The first set of parallel rails 509 allow robots 152, 202,204 to move in the X-direction across the top of storage column 505, and the second set of parallel rails 511 allow robots 522,202,204 to move in the Y-direction across the top of storage column 505.

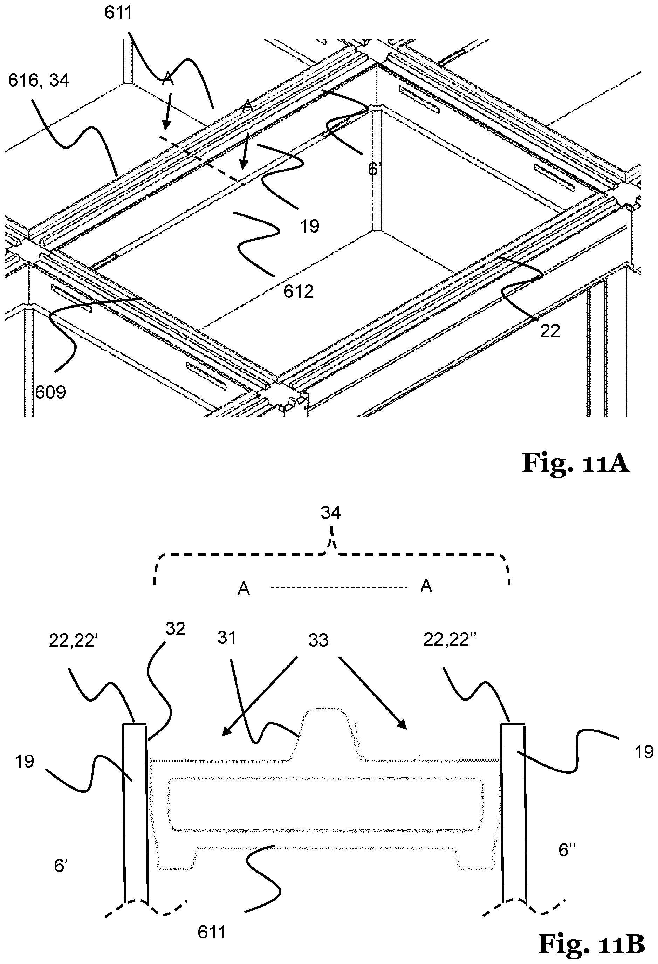

A rail of rail system 516 typically comprises two side support sections, two horizontal support surfaces (e.g. surfaces 33 in Fig.11B), along with a raised central track (e.g. 31 in Fig.11B). Such a rail is dimensioned to accommodate the wheels of the one or more robots 522, and to allow the movement of the robots 522 around the grid system, as discussed above. The rails of rail system 516 are disposed generally above, or across the top of, the storage columns of the storage and retrieval system, and run between adjacent storage columns in a regular grid-like pattern.

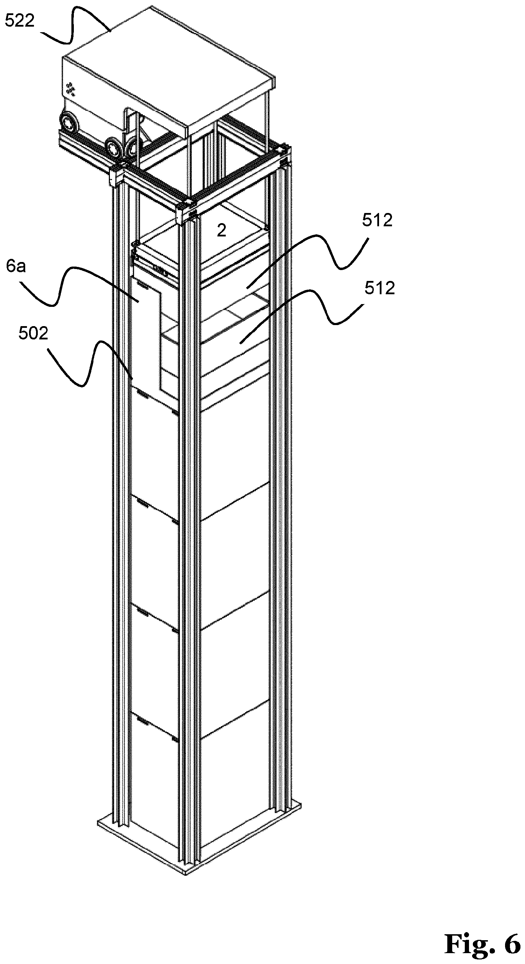

The cantilever type robot 202, which may also be referred to as a container-handling vehicle or container lifter, can feature a first type of lifting frame 2 having grippers 3 configured to releasably connect to connector recesses arranged in an upper rim 16 of a storage container 512, as shown in Fig.6. The cantilever type robot 202 is configured to retrieve a storage container 512 via the open top end 9 of an upper stacker frame 6a of a stack of stacker frames 6. The upper stacker frame 6a in Fig. 6 has a cut-away section to better illustrate the stacking of the storage containers 112 inside the stacker frame 6'. To retrieve a storage container 512 from a stacker frame 6, the first type of lifting frame 2 has an outer periphery being smaller than an inner periphery of the stacker frame 6. The inner periphery of the stacker frame 6 may be configured to guide the vertical movement of the first type of lifting frame 2 within the stacker frame 6.

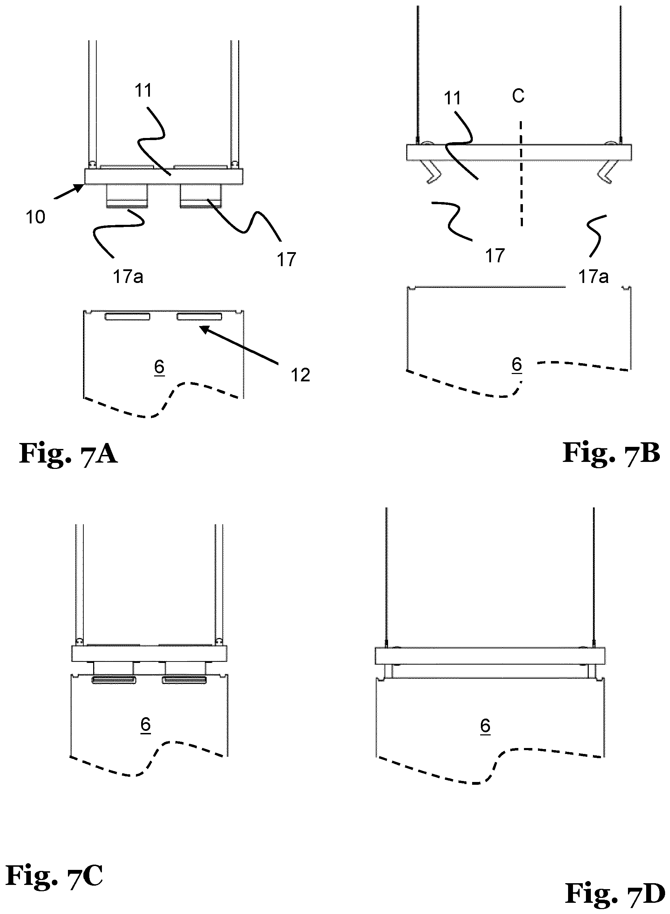

The internal cavity type robot 204 features a second type of lifting frame 10, see Fig.7A-D. The internal cavity type robot 204 may also be referred to as a "stacker frame lifter". The internal cavity type robot 204 is configured to retrieve an upper stacker frame 6' accommodated in a storage column 505. The second type of lifting frame 10 comprises a horizontal base frame 11 and latches 17 arranged at each of two opposite sides of the base frame 10. A connecting portion 17a of each latch 17 is configured to move between a release position, and a connecting position. In the release position the connecting portion 17a is closer to a vertical centreline C of the base frame 10 than in the connecting position. When moving from the release position to the connecting position, the connecting portion 17a is moved away from the vertical centreline C and may extend through a corresponding recess 12 in the side wall 20 of a stacker frame 6. Having the latches 17 connecting to the stacker frame at an inner surface of the stacker frame is advantageous in that the space between adjacent stacks of stacker frames may be minimized. Further, the width of the side sections 20, or walls, of the stacker frames may be also be minimized provided the stacker frames are made in a material and/or have a configuration providing sufficient support for the stacker frames stacked above. To provide an increased lifting height, the second type of lifting frame 10 may be further modified, for example by having a guide shuttle as described in WO 2020/200631 A1, which is incorporated herein by reference.

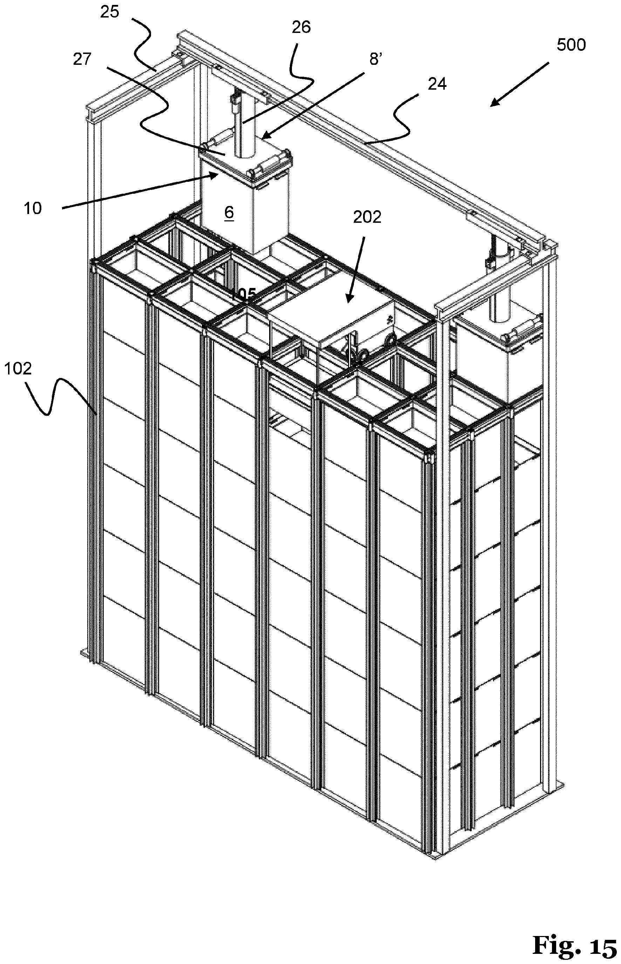

A further embodiment of the exemplary storage and retrieval system 500' for stacker frames is shown in Fig.15. In the exemplary storage system 500', a second embodiment of a stacker frame lifter 8', or internal cavity type robot 204, is arranged to move above the storage columns 505 by a crane assembly. The crane assembly comprises a first gantry beam 24 slidably connected to a second gantry beam 25, such that the first gantry beam 24 may move in a first direction above the storage columns 505. The stacker frame lifter 8' is slidably connected to the first gantry beam 24, such that the stacker frame lifter 8' may move in a second direction perpendicular to the first direction. The second type of lifting frame 10 is suspended from a lifting platform 27 by lifting bands. The lifting platform may be connected to the first gantry beam 24 by a telescopic arm 26. The telescopic arm 26 is configured to move the lifting platform between an upper position in which the stacker frame lifter 8' may move a stacker frame above the storage columns 105, and a lower position in which the lifting frame, and any connected stacker frame, may be lowered into a storage column. In the upper position, the bottom section 18 of a stacker frame 6 connected to the lifting frame 10 may advantageously be at a level above an upper level of the cantilever type robot 202. In this manner, the stacker frame 6 maybe moved above the storage columns 105 without interfering with the operation of the container handling vehicle, or cantilever type robot 202, and vice versa.

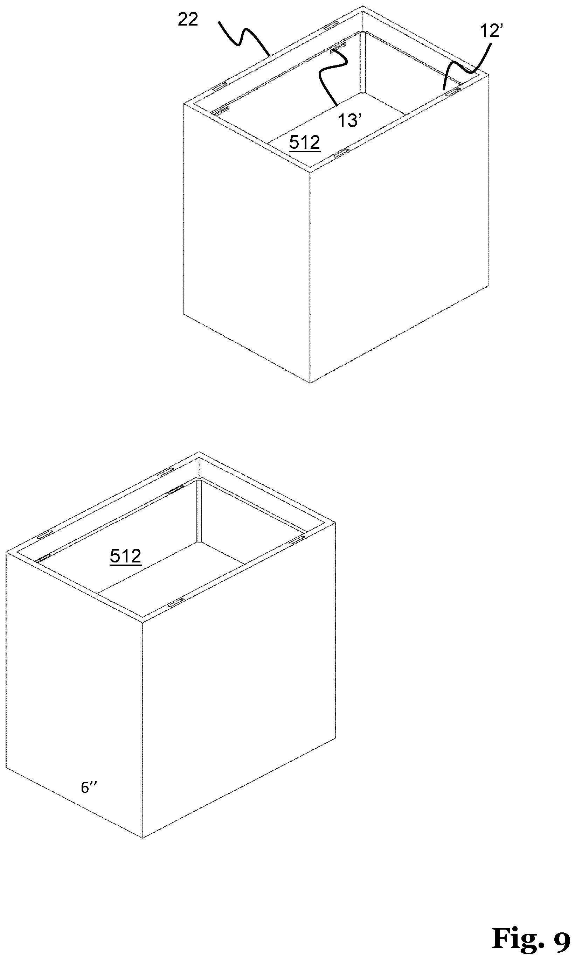

Other versions of combinations of stacker frames and storage containers are shown in Fig 9. The main differentiating feature of these combinations in view of the stacker frame 6 and storage containers 112 discussed above is the positioning of the connecting recesses 13', 12' of the storage container 512 and/or the stacker frame 6". In both versions, the stacker frame features connecting recesses 12' in an upper rim thereof. The connecting recesses 12' may for instance be suitable for connection by a second type of lifting frame (not shown) having grippers similar to the container connectors 3 of the cantilever type robot 202. The connecting recesses 13' of the storage container 112" may for instance be suitable for connection by a first type of lifting frame (not shown) having latches 17 similar to the second type of lifting frame. In some implementations, the internal cavity type robot, or stacker frame lifter, 204 is arranged to move above the storage columns by a crane assembly. In this manner, the stacker frame 6 may be moved above the storage columns 505 without interfering with the operation of the container handling vehicle, or robot, 122, and vice versa.

Provided the cantilever type robot 202 (i.e. container lifter or container-handling vehicle) is configured to lift storage containers 512 of different heights, a stack of storage containers in a stacker frame may comprise a mix of such storage containers.

### A storage and retrieval system according to the claimed invention

Described above in relation to Fig.1-5 and Fig.5-10 are first and second storage and retrieval systems, wherein the first storage and retrieval system is configured to accommodate storage containers, and the second storage and retrieval system is configured to accommodate stacker frames. As noted further above, the present inventors have recognised a need to provide a storage and retrieval system which can accommodate storage columns for both stacker frames and storage containers. As a stacker frame is configured to accommodate a plurality of storage containers, a stacker frame is typically larger than a standard storage container. The larger dimensions of the stacker frame can prevent it from being utilised alongside storage containers in storage and retrieval systems, as the storage columns configured to accommodate stacker frames may not be able to share a rail system (i.e. a rail grid) with storage columns configured to accommodate storage containers. Described herein is a stacker frame 6', and a corresponding storage and retrieval system 600, which address this and other issues in the art.

A stacker frame 6' according to the present invention is illustrated in Fig.11A-B. In particular, Fig. 11A shows a perspective view of stacker frame 6', and Fig.11B shows a cross-sectional view of rail 34 positioned between adjacent stacker frames 6' and 6". The stacker frame 6' is configured to accommodate one or more storage containers 612, as shown. The stacker frame also comprises an open top end 19, comprising a rim 22. The open top end 19 is configured to allow storage containers 612 to be received by the stacker frame 6', and is thus dimensioned to accommodate the vertical passage of a storage container 612 into and out of the stacker frame 6'.

At least part of the rim 22 of stacker frame 6' comprises a section of rail, where the section of rail is configured to cooperate with a rail system 616 disposed generally above the stacker frame 6'. The section of rail may be configured to cooperate with a first set of parallel rails 609, and/or a second set of parallel rails 611, where the first set of parallel rails 609 are arranged perpendicularly to the second set of parallel rails 611. The first set of parallel rails 609 guide movement of robots 622 in, for example, the X-direction 108 as defined in Fig. 1, and the second set of parallel rails 611 guide movement of robots 622 in, for example, the Y-direction 110 as defined in Fig.1. In other words, the section of rail may comprise a track for guiding robots 122, such as the internal cavity type robot 204 (i.e. the stacker frame lifter), or the cantilever type robot 202, in a first direction and/or a second direction around the rail system, wherein the first direction is perpendicular to the second direction.

In some implementations, the section of rail may be integrally formed with the stacker frame, and/or may be integrally formed with the rim of the stacker frame. In other words, the section of rail may be embedded in the rim of the stacker frame and/or the section of rail may form an integral part of the stacker frame.

As shown in Fig.11B, the section of rail may comprise at least a side support section 32 of a rail 34, wherein the rail 34 forms part of the rail system 616. In other words, a section of the rim 22 and/or top section 19 of the stacker frame 6' may form a side support section of the rail 34. The rail 34 itself may be formed from a plurality of subsections of rail - for example, a raised central track 31, one or more side support sections 32, and/or one or more horizontal support surfaces 33 which together form the rail 34. For example, a rail 34 may comprise a raised central track 31, two side support sections 32 and two horizontal support surfaces disposed either side of the raised central track 31, where the stacker frame 6' is arranged to provide one side support section 32 of the rail 34.

In some implementations, a section of the rim 22 and/or top section 19 of stacker frame 6' may form a side support section 32 for one or both rails of the first set of parallel rails 609. In other implementations, a section of the rim 22 and/or top section 19 of stacker frame 6' may form a side support section 32 for one or both rails of the second set of parallel rails 611. In yet further implementations, a section of the rim 22 and/or top section 19 of stacker frame 6' may form a side support section 32 for one or both rails of the first set of parallel rails 609, and one or both rails of the second set of parallel rails 611. In any such implementation, only a partial rail comprising a raised central track 31, and horizontal support surfaces 30 may be required between adjacent storage columns in the grid, as shown in Fig.11B, where the adjacent storage columns are each configured to accommodate one or more stacker frames 6'. For implementations where only one column of the adjacent storage columns is configured to store stacker frames 6', a partial rail comprising a raised central track 31, a side support section 32 and horizontal support surfaces 30 may be required between the adjacent storage columns. A side support section may also be referred to herein as a side support surface.

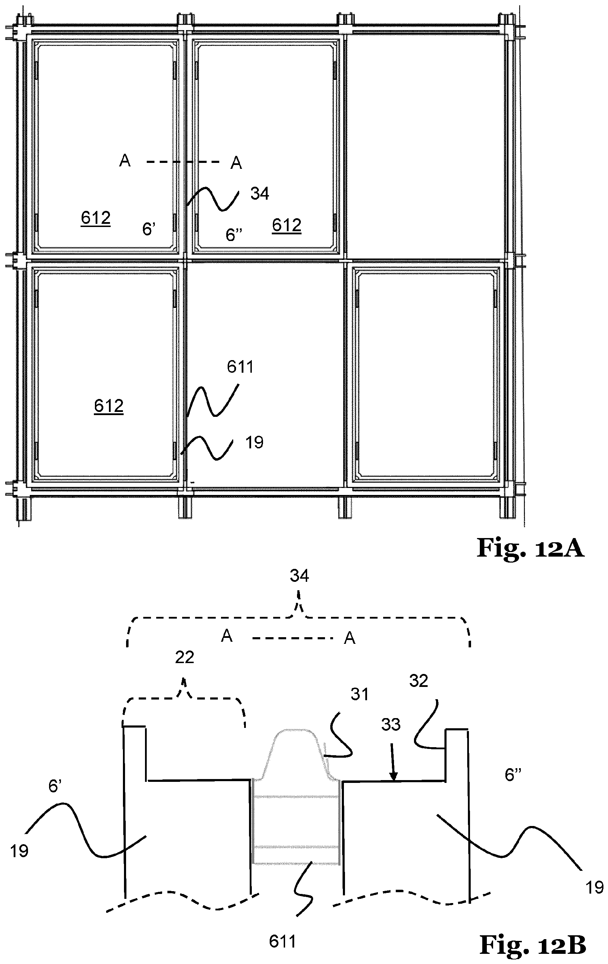

In some implementations, the section of rail may comprise at least a horizontal support surface 33 of a rail 34. Fig. 12A-B illustrates a second embodiment of the stacker frame 6', wherein at least part of the rim 22 of the stacker frame 6' provides a horizontal support surface 30 of the rail 34. In such implementations, a section of the rim 22 and/or top section 19 of stacker frame 6' forms at least one horizontal support surface 33 for one or both rails of the first set of parallel rails 609. In other implementations, a section of the rim 22 and/or top section 19 of stacker frame 6' may form a horizontal support surface 33 for one or both rails of the second set of parallel rails 611. In yet further implementations, a section of the rim 22 and/or top section 19 of stacker frame 6' may form a horizontal support surface 33 for one or both rails of the first set of parallel rails 609, and one or both rails of the second set of parallel rails 611. In such implementations, only a partial rail comprising a raised central track 31 may be required between adjacent storage columns in the grid, where the adjacent storage columns are each configured to accommodate one or more stacker frames 6'. For implementations where only one column of the adjacent storage columns is configured to store stacker frames 6', a partial rail comprising a raised central track 31, a side support section 32 and a horizontal support surface 30 may be required between the adjacent storage columns.

In some implementations, the rim 22 of the stacker frame 6' may provide a horizontal support surface 33 and a side support section 32 of the rail 34. In such implementations, only a partial rail comprising a raised central track 31 may be required between adjacent storage columns in the grid, as shown in Fig.12B, where the adjacent storage columns are each configured to accommodate one or more stacker frames 6'. For implementations where only one column of the adjacent storage columns is configured to store stacker frames 6', a partial rail comprising a raised central track 31, a side support section 32 and a horizontal support surface 30 may be required between the adjacent storage columns.

In an exemplary configuration, the entirety of the rim 22 of the stacker frame 6' forms a section of the rail system 616. In such a configuration, a first section and a second section of the rim 22 provide respective sections of rail for the first set of parallel rails 609, and a third section and a fourth section of the rim provide respective sections of rail for the second set of parallel rails 611 of the rail system 616. Each respective section of rail provided by the rim 22 may have any or all of the features described with reference to Fig.11A-B and Fig.12A-B.

As the stacker frame 6' provides a section of the rail, only a partial rail is required between the storage column which accommodates the stacker frame 6', and an adjacent storage column in the grid (Fig.iiA,B A-A). For example, in Fig.11B it can be seen that as top section 19 of the stacker frame 6' provides a side support section, only a partial rail comprising a raised central track 31 and two horizontal support surfaces 33 is required between storage columns, where the adjacent storage columns are each configured to accommodate one or more stacker frames 6', 6". As only a partial rail is required between the adjacent storage columns, more space is available to accommodate the stacker frame 6' in the storage column 605. In this way, a stacker frame 6' can be accommodated in a grid comprising storage columns dimensioned for the storage of storage containers, without affecting the rail system or rail grid. The provision of a section of rail in the rim of a stacker frame can thus compensate for the extra space occupied by the stacker frame in the storage column, allowing the stacker frame to be accommodated (i.e. received) in a grid comprising storage columns dimensioned for the storage of storage containers.

In other words, providing a stacker frame 6' with a rim comprising a section of rail, wherein the section of rail is configured to cooperate with a rail system of the storage and retrieval system, allows for the stacker frame 6' to be used with storage and retrieval systems which may not otherwise be configured to allow the use of such stacker frames. As explained further above, the larger dimensions of a stacker frame can prevent it from being used in a storage and retrieval system which is configured to store vertical stacks of only storage containers 112, as the dimensions of the stacker frame may not fit within the corresponding rail system. Providing a stacker frame with a section of rail at the rim of the stacker frame means that only a partial rail is required between the stacker frame storage column and an adjacent column, thus providing increased space in the corresponding storage column to accommodate the stacker frame. As such, a storage and retrieval system can be provided which can accommodate both stacker frames 6' and storage containers 612.

Stacker frame 6' may otherwise comprise the same or similar features to stacker frame 6 described further above with respect to Fig. 1-9 above. For example, stacker frame 6' may comprise a recess in each opposing side wall, and each recess may be arranged near an uppermost position of the respective side wall. Similarly, the stacker frame 6' may be configured to accommodate at least a plurality of storage containers arranged vertically (i.e. arranged in a vertical stack).

To improve the stability of a stack of stacker frames, the bottom wall 18 of the stacker frame 6' may comprise a recessed portion 23 having an outer periphery being smaller than, i.e. fitting within, an inner periphery of the top section 19 of a stacker frame. In this manner, the stacker frames 6' may be stacked on top of another while horizontal movement between them is restricted.

In some implementations, the stacker frame can comprise at least two opposing side walls, wherein each opposing side wall comprises a section of the rim. A stacker frame can further comprise a bottom wall, wherein the at least two opposing side walls extend from the rim to the bottom wall 18. In yet further implementations, the stacker frame can further comprise two opposing end walls, where the two opposing end walls extend between the bottom wall and the top end or section 19 of the stacker frame, and are arranged perpendicularly to the two opposing side walls.

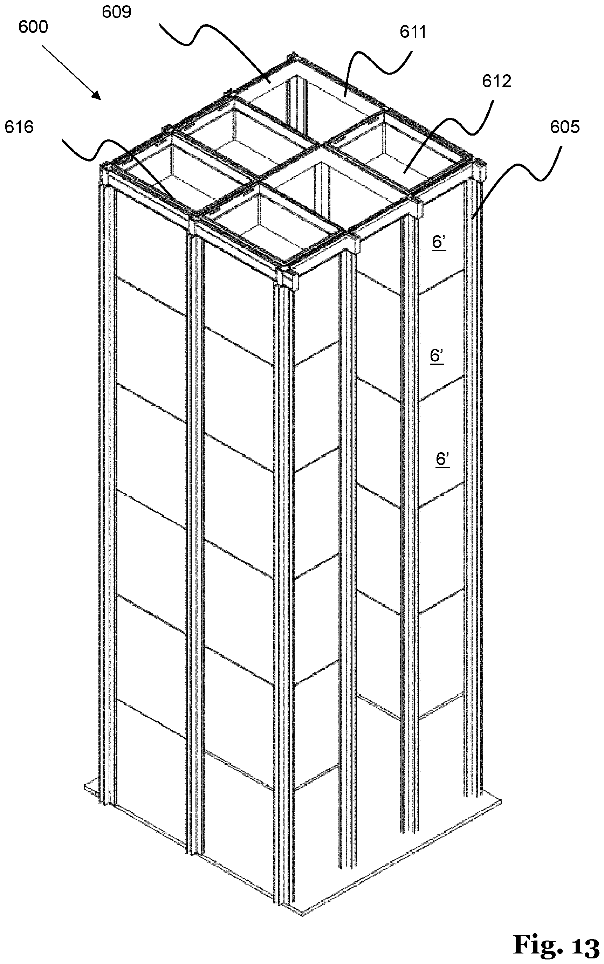

Also provided herein is a storage and retrieval system 600, according to the claimed invention, as shown in Fig.13. The storage and retrieval system comprises a framework structure, or grid, comprising a plurality of storage columns, wherein at least one storage column 605 is configured to accommodate one or more stacker frames 6', a rail system 616 disposed above the plurality of storage columns, and one or more stacker frames 6'. The at least one storage column may be configured to accommodate one or more stacker frames due to the presence of only a partial rail between the at least one storage column and one or more adjacent storage columns in the storage system. In other words, the at least one storage column may be configured to accommodate one or more stacker frames as it is configured to receive one or more stacker frames 6' according to the present invention.

In such a system, at least one of the one or more stacker frames 6' may be arranged at an uppermost position of the storage column of the plurality of storage columns. In this way, the rim 22 comprising at least a section of a rail forms part of the grid system and cooperates with the rest of the rail system 616.

The claimed invention thus provides a storage and retrieval system which can accommodate both storage columns for stacker frames 6' and storage columns for storage containers 612 within the same rail system 616.

In some implementations, adjacent stacker frames 6',6" may, together with a partial rail, form a rail 34 of the rail system. In such implementations, a first stacker frame 6' of the one or more stacker frames is accommodated in a first storage column of the plurality of storage columns, wherein the first stacker frame 6' is arranged at an uppermost position of the first storage column. A second stacker frame 6" of the one or more stacker frames is accommodated in a second storage column, the second stacker frame arranged at an uppermost position of the second storage column, wherein the second storage column is adjacent to the first storage column. In such a configuration, a first rim 22 of the first stacker frame 6', and a second rim 22' of the second stacker frame 6" are configured to together provide a section of a rail 34, the rail forming a section of the rail system 116.

An exemplary configuration of the system can be seen in Fig.11A-B, wherein a first stacker frame 6' is arranged at an uppermost position of a first storage column, and a second stacker frame 6" is arranged at an uppermost position of a second storage column. At least part of a first rim 22' of the first stacker frame 6' and at least part of a second rim 22' of the second stacker frame 6" each provide a side support sections 19 of a rail 34, the rail forming a section of the rail system 116. The first section of the first rim of the first stacker frame and the second section of the second rim of the second stacker frame are parallel as shown for example in Fig 11A-B, and together form a section of the rail 34 of the rail system.

A second exemplary configuration of the system can be seen in Fig.12A-B, wherein a first stacker frame 6' is arranged at an uppermost position of a first storage column, and a second stacker frame 6" is arranged at an uppermost position of a second storage column. At least part of a first rim 22' of the first stacker frame 6' and at least part of a second rim 22' of the second stacker frame 6" each provide at least a horizontal support surface 19 of a rail, the rail forming a section of the rail system. In some implementations, the at least part of the first rim 22' of the first stacker frame 6' and the at least part of the second rim 22' of the second stacker frame 6" may each provide both a horizontal support surface 30 and a side support section 19 of a rail, the rail forming a section of the rail system.

Also provided herein is a method 700 of retrieving a storage container from the claimed storage and retrieval system, as depicted in Fig.15. The method 700 may be carried out by a controller, a computer, or a control system, such as processing system 400.

At step 705, a target stacker frame in which a target storage container is stored is determined. The target stacker frame may be determined, or identified, by a controller, computer, or control system, such as processing system 400. The target storage container may be identified using its unique identifier, which may be marked on the storage container using a computer-readable identifier (e.g., a barcode, quick-response code or radio-frequency identification tag). The target storage container may be identified by the computer, controller or control unit configured to carry out the method 700, such as processing system 400.

At step 710, a storage column comprising the target stacker frame is identified. As with step 705, this step may be carried out by a controller, computer, or control system, such as processing system 400.

At step 715, a stacker frame lifter, or internal cavity type robot 204, is transported to the identified storage column using the rail system 616. The stacker frame lifter may be transported under the control of the controller, computer or control system, and may be caused to move along one or more sets of parallel rails 609,611 to reach the identified storage column. Transporting the stacker frame lifter may include moving the stacker frame lifter over or along one or more sections of rail 34 provided by stacker frame 6', to reach an access opening of the target storage column.

At step 720, one or more stacker frames stacked above the target stacker frame are retrieved. Retrieving the one or more stacker frames may comprise repositioning the one or more stacker frames in the grid. In other words, where the target stacker frame is positioned below other stacker frames in the stack, a controlled 'digging' operation takes place, where stacker frames above the target stacker frame are sequentially lifted and repositioned, temporarily or permanently, to other locations in the grid. In other words, the one or more stacker frames stacked above the target stacker frame may be stored in at least a second storage column.

At step 725, the target storage container is retrieved from the target stacker frame. A robot 122, such as a cantilever-type robot, may be used to retrieve the target storage container from the target stacker frame. Retrieving the target storage container may comprise repositioning one or more storage containers stacked on top of the target storage container in the stacker frame in the grid. In other words, where the target storage container is positioned below other storage containers in the stacker frame, a controlled 'digging' operation takes place, where storage containers above the target storage container are sequentially lifted and repositioned, temporarily or permanently, to other locations in the grid. Once retrieved, the target storage container may then be transported to, for example, a port column for transfer out of the grid.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A stacker frame for a storage and retrieval system, wherein the stacker frame is configured to accommodate one or more storage containers, the stacker frame comprising:
an open top end, the open top end comprising a rim,
wherein at least part of the rim comprises a first section of a rail,
the first section of the rail configured to cooperate with a rail system disposed generally above the stacker frame.

2. The stacker frame of claim 1, wherein the first section of the rail is integrally formed with the rim of the stacker frame.

3. The stacker frame of claim 1 or claim 2, wherein the first section of the rail comprises at least a side support section of the rail.

4. The stacker frame of any preceding claim, wherein the first section of the rail comprises at least a horizontal support surface of the rail.

5. The stacker frame of any preceding claim, wherein the stacker frame comprises at least two opposing side walls, wherein each opposing side wall comprises a section of the rim and/or wherein each opposing side wall comprises a recess arranged near an uppermost position of the respective side wall.

6. The stacker frame of claim 5, wherein the stacker frame comprises a bottom wall, and the at least two opposing side walls, the at least two opposing side walls extending from the rim of the stacker frame to the bottom wall and, optionally, wherein the stacker frame further comprises two opposing end walls, wherein the two opposing end walls extend between the bottom wall and the top end of the stacker frame, and are arranged perpendicularly to the two opposing side walls.

7. The stacker frame of claim 6, wherein the bottom wall of the stacker frame comprises a recessed portion, the recessed portion having an outer periphery smaller than the inner periphery of the top end of the stacker frame.

8. A storage and retrieval system for a plurality of storage containers, the storage and retrieval system comprising:
a framework structure comprising a plurality of storage columns, wherein at least one storage column is configured to accommodate one or more stacker frames;
a rail system disposed above the plurality of storage columns; and
one or more stacker frames according to any of claims 1 to 7.

9. The storage and retrieval system of claim 8, wherein the rail system comprises a rail grid disposed above the plurality of storage columns.

10. The storage and retrieval system of claim 8 or 9, wherein at least one of the stacker frames is arranged at an uppermost position of a storage column of the plurality of storage columns.

11. The storage and retrieval system of any of claims 8 to 10, further comprising:
a first stacker frame of the one or more stacker frames in a first storage column, the first stacker frame arranged at an uppermost position of the first storage column; and
a second stacker frame of the one or more stacker frames in a second storage column, the second stacker frame arranged at an uppermost position of the second storage column, the second storage column adjacent to the first storage column,
wherein a first rim of the first stacker frame and a second rim of the second stacker frame are configured to together provide a section of a rail, the rail forming a section of the rail system, and
optionally, wherein a section of the first rim of the first stacker frame and a section of the second rim of the second stacker frame are parallel, and together form the section of the rail system.

12. The storage and retrieval system of claim 11, wherein the first rim of the first stacker frame and the second rim of the second stacker frame each comprise a respective side support section, and/or wherein the first rim of the first stacker frame and the second rim of the second stacker frame each comprise a respective horizontal support surface.

13. The storage and retrieval system of any of claims 8 to 12, further comprising a stacker frame lifter, the stacker frame lifter configured to move around the storage system via the rail system, and further configured to retrieve a stacker frame accommodated in a storage column, and optionally wherein the rail system is arranged to allow the stacker frame lifter to move in a first direction and in a second direction, where the first direction is perpendicular to the second direction.

14. A method of retrieving a storage container from the storage and retrieval system of any of claims 8 to 13, comprising:
determining a target stacker frame in which a target storage container is stored;
identifying a first storage column of the storage system comprising the target stacker frame;
transporting a stacker frame lifter to the first storage column using the rail system;
retrieving one or more stacker frames stacked above the target stacker frame in the first storage column using the stacker frame lifter; and retrieving the target storage container from the target stacker frame.

15. The method of claim 14, further comprising:
storing, in a second storage column, the one or more stacker frames stacked above the target stacker frame.
